# EUROPEAN PATENT APPLICATION

(11) **EP 3 082 018 A1**
(43) Date of publication of application: **19.10.2016**
(21) Application number: 16165184.9
(22) Date of filing: 13.04.2016
(51) Int. Cl.: G06F 3/01, B65G 1/137, G06Q 10/08, G02B 27/01, G06F 3/0484, G06F 9/44

(54) **HOLOGRAPHIC PICKING SYSTEM AND METHOD FOR PICKING PRODUCTS UTILIZING A HOLOGRAPHIC PICKING SYSTEM**

(30) Priority: 13.04.2015 US 201562146750 P; 15.12.2015 US 201514970468
(71) Applicant: Real Picking, LLC, Las Vegas, NV 89109 (US)
(72) Inventor: AVILES, Eduardo, Las Vegas, NV Nevada 89109 (US)
(74) Representative: Moore, Michael Richard

(57) **Abstract**

A holographic picking system directs a person wearing a visor capable of projecting holographic images through the process of finding items within a storage facility and placing them in a bin, cart, or pallet that is used to transport the items within the storage facility. The system uses holograms to display where the person should move, where the picking location is, how many items to pick, and the precise position where the items picked should be placed on the bin, cart, or pallet. The system uses image recognition technology for navigation; to validate that the picking location from where items are being retrieved is the correct one; to validate that the item picked is the desired one; to store information about the item picked for tracking purposes; and to ensure that the item is placed in the correct position and with the correct orientation within the bin, cart, or pallet.

## Description

### BACKGROUND

### 1. Field

The disclosed embodiments relate to logistics systems. More specifically, the disclosed embodiments relate to warehouse product picking logistics, pallet and container building logistics, and a holographic imaging picking system.

### 2. Related Art

In product distribution, it is important that product storing and shipping throughout the course of the product's life cycle be as efficient as possible. Generally, the storing and shipping of inventory is an added cost to manufacturers and distributors. Such manufacturers and distributors therefore seek to limit such costs incurred through the storing and shipping of inventory. For example, the storing and shipping of products is overseen by complicated logistics systems. These systems keep track of where inventory is stored and shipped to help move the product from its place of manufacture, to warehouses, and ultimately to a store or to a consumer.

Such logistics systems may direct workers to store products in certain areas, pick products from storage to be shipped, and move products from one place to another. All the while, the logistics systems track the locations of the products. Although such logistics systems plan each of these steps specifically and efficiently in advance, there is a high likelihood that a worker carrying out the instructions may make mistakes. For example, a logistics system may instruct a worker to pick particular products from a bin in a warehouse and build a pallet of products to place onto a truck for shipping. However, the worker may accidentally pick the wrong product or pick too many or not enough of the product. Furthermore, the user may not build the pallet with the products exactly as the logistics system directs. All of this may lead to inefficiencies in moving inventory from the manufacturers to the consumers.

### SUMMARY

In view of the above, there is a need for a logistics system that can more effectively instruct a worker to pick and move the correct products while reducing the possibility of user error. There is also a need for a more effective means of communicating such instructions to the worker. The disclosed embodiments have been developed to address these issues and aspects of the invention may include holographic logistic systems, methods for product picking using a holographic projective visor, and the like.

In some embodiments, a holographic picking system directs a person wearing a visor capable of projecting holographic images through the process of finding items within a storage facility and placing them in a bin, cart, or pallet that is used to transport the items within the storage facility. The holographic picking system uses holograms to display to the person where he should move, where the exact picking location is within the storage facility, how many items to pick, and the precise position where the items picked should be placed on the bin, cart or pallet.

In order to perform these functions, some embodiments of the holographic picking system use image recognition technology to identify landmarks within the storage facility for navigation; to validate that the picking location from where items are being retrieved is the correct one; to validate that the item picked is the desired one; to store information about the item picked for tracking purposes; and to ensure that the item is placed in the correct position and with the correct orientation within the bin, cart, or pallet used to transport the items.

According to some embodiments of the invention, a holographic picking system may comprise a visor configured to generate holographic images appearing as overlaid on a real background environment. The visor may include a processor and control instructions. When the control instructions are executed, the system may validate a user and receive logistics information for items to be picked. The system may further overlay navigation instructions viewable to the user against the real background to navigate to a predetermined product location. The system may also identify and validate a product picked by a user and may overlay product placement instructions to place the product on a container.

The navigation instructions may be generated by determining the user's location within a picking area and calculating a path to the predetermined product location. In some embodiments, the user's location is determined via at least one of an NFC, Wi-Fi, GPS, and RFID positioning system. For example, the location may be triangulated using signal strength or timing of signals received by or from different transceivers. In further embodiments, the user's location is determined via image recognition of predetermined landmarks as imaged by a camera of the visor. The navigation instructions may appear as holographic arrows overlaid on the real environment.

In some embodiments, the system may identify the product picked by a user via at least one of image recognition, text recognition, a one-dimensional barcode, and a two-dimensional barcode. The system may provide at least one of a visual and an audio communication to the user instructing the user concerning a quantity of products to be picked.

In further embodiments, the system may provide at least one of a visual and an audio communication to the user to indicate whether the correct item has been picked. The visual and audio communication may include a holographic overlay appearing as a green check mark to indicate a correct item has been picked, and a holographic overlay appearing as a red X mark to indicate that an incorrect item has been picked.

In other embodiments of the invention, there is a machine implemented method of loading a storage container with inventory performed with a visor configured to generate holographic images appearing as overlaid on a real background. The method may comprise generating instructions for a user to load the storage container with predetermined inventory. Based on the generated instructions, the method may also include overlaying a holographic image onto the storage container indicating where a product should be placed in the storage container. Once the product is placed by the user, the method may comprise validating the placement of the product on the storage container.

In some embodiments, the instructions are generated based on logistics for later retrieving the inventory from the storage container. In some instances, the holographic image is a holographic outline of the product to be placed in the storage container. In further embodiments, the validating step comprises at least one of a visual and an audio communication indicating whether the correct item has been correctly placed in the storage container. The visual and audio communication may comprise a holographic indicator.

In still further embodiments of the invention, there is a machine implemented inventory management method utilizing a visor configured to generate holographic images appearing as overlaid on a real background. The method may comprise validating a user and receiving logistics information for inventory to be moved by the user. When the user is validated, the method may further comprise generating navigation instructions to overlay onto the real background to navigate the user to a predetermined product location. The method may also comprise identifying and validating a product moved by a user, and generating product placement instructions to overlay onto the real background to place the product in a storage location.

In some embodiments, the navigation instructions may be generated by determining the user's location and calculating a path to the storage location. The navigation instructions may appear as arrows overlaid on the real environment.

The system may identify the product moved by a user via at least one of image recognition, text recognition, a one-dimensional barcode, and a two-dimensional barcode. In some exemplary embodiments, the system may provide a visual and/or an audio communication to the user instructing the user concerning a quantity of products to be moved. The system may also provide a visual and/or an audio communication to the user to indicate whether the correct item has been moved.

Other systems, methods, features and advantages of the invention will be or will become apparent to one with skill in the art upon examination of the following figures and detailed description. It is intended that all such additional systems, methods, features and advantages be included within this description, be within the scope of the invention, and be protected by the accompanying claims.

### BRIEF DESCRIPTION OF THE DRAWINGS

FIG. 1 illustrates a holographic picking system, according to one exemplary embodiment.
FIG. 2 illustrates a method for picking products utilizing a holographic picking system, according to one exemplary embodiment.
FIG. 3 illustrates an example of a holographic picking system, according to one exemplary embodiment.
FIG. 4 illustrates an example of a holographic picking system, according to one exemplary embodiment.
FIG. 5 illustrates an example of a holographic picking system, according to one exemplary embodiment.
FIG. 6 illustrates an example of a holographic picking system, according to one exemplary embodiment.
FIG. 7 illustrates an example computing device for implementing a holographic picking system, according to one exemplary embodiment.

The components in the figures are not necessarily to scale, emphasis instead being placed upon illustrating the principles of the invention. In the figures, like reference numerals designate corresponding parts throughout the different views.

### DETAILED DESCRIPTION OF EMBODIMENTS

The disclosed embodiments include systems and methods for logistics systems. Specifically, the disclosed embodiments disclose systems and methods for holographic picking of products in a warehouse or similar environment.

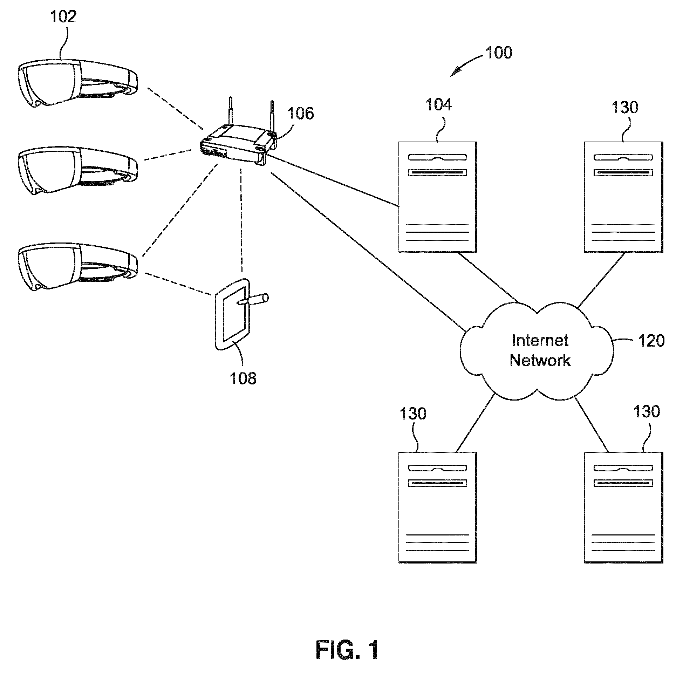

FIG. 1 illustrates a holographic picking system, according to one exemplary embodiment. The holographic picking system may be implemented on a local network 100 at a warehouse or other storage, shipping, or inventory facility. The local network 100 may be one of any known wired or wireless networks. The local network 100 includes one or more visors 102. The visors 102 are capable of projecting holographic images that are visible to the person wearing the visor 102. The visor 102 also allows the person to see his surroundings, thus providing the opportunity to overlay holograms onto real world objects in the person's environment.

The visor 102 may include at least one processor, a camera, a wired and/or wireless communication interface, a memory, and a holographic projector system. The wired and/or wireless communication interface may allow the visor 102 to connect to other external devices in the local network 100 via wi-fi, NFC, Bluetooth, or other protocols now known or later developed. The visor 102 may be a visor such as the one described in U.S. Patents Nos. 8,477,425 and 8,467,133, and/or U.S. Patent Application No. 2015/0016777.

As one example, the visor 102 may connect with one or more local servers 104 via a router 106. In addition or alternatively, the visor 102 may connect to a PDA 108, such as a tablet, smart phone, or other device, which is connected to server 104 via the router 106. The server 104 may comprise at least one memory, at least one processor, and a number of input and output devices as are now understood or will be later developed. The server 104 may include instructions for implementing the holographic logistics system as will described in more detail below. The server 104 may further be connected to an external network 120, such as the Internet, to establish an external connection with one or more external servers 130. Of course, the visors 102 and the PDA 108 may alternately be configured to connect directly to the network 120.

In the system described above, the visors 102 may receive instructions from the server 104 or external servers 130 via the router 106 and/or PDA 108 for implementing a logistics systems. That is, instructions for moving inventory that is in a warehouse or other facility may be given to a worker at the warehouse via the visor 102. The instructions may be generated at the server 104 by an input to the server 104, or the instructions may be generated based on input received from the external servers 130 via the network 120.

For example, the system may store one or more layouts and/or configurations of the picking area that the workers will navigate, such as a warehouse, storeroom, and the like. This information may be stored on the one or more servers 104 or may be transferred to one or more memories on the visors 102 or PDA 108. The holographic picking system may also use the holographic visor 102 to generate the layout and configuration of the picking area by capturing images of the picking area with one or more cameras on the holographic visor 102.

Similarly, the holographic picking system may store information to identify each item to be picked. This identification can be an image of the item, a barcode, product name, an item number and/or any other product identifier. The holographic visor 102 can be used to capture such information via a camera or other input device.

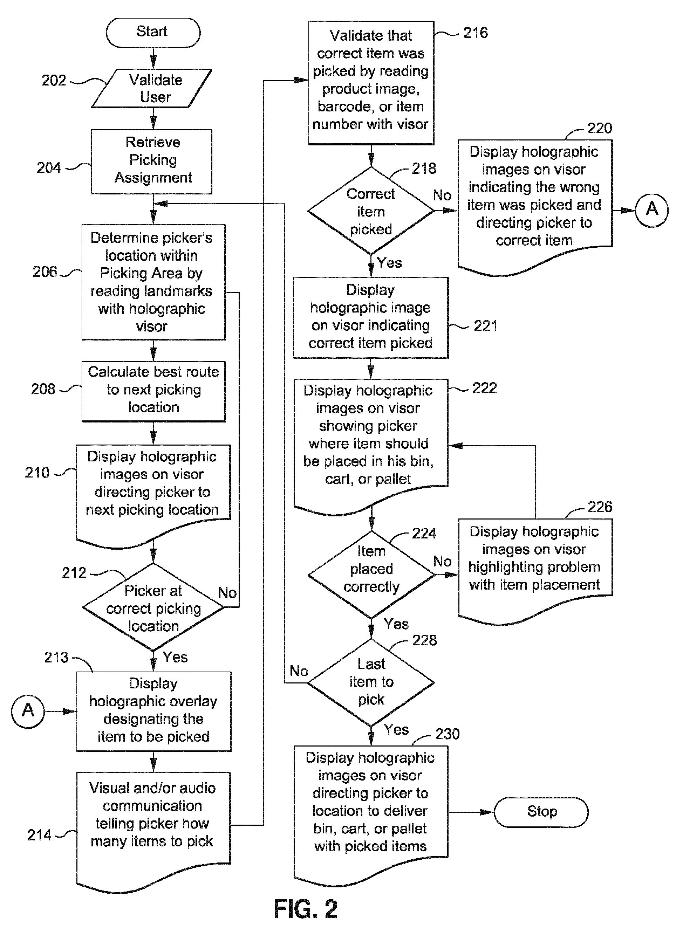

FIG. 2 illustrates a method for picking products utilizing a holographic picking system, according to one exemplary embodiment. The holographic picking process generally comprises four tasks: initialization, navigation, item validation, and item placement.

### 1.- Initialization

First, in step 202, the system validates a user's identity. For example, a user, such as an employee of a warehouse, may enter a user name and password to authorize access to the system and to match tasks that are assigned to the user. In step 204, the system retrieves the picking assignment the person must carry out. For example, task assignments may be generated for the validated user, and the layout of the picking area where the tasks will be performed is loaded and item information such as quantity, description, images, item number, and barcode is stored. The locations where the picked items must be placed within a bin, cart, or pallet is saved.

### 2.- Navigation

In step 206, the holographic picking system determines the picker's location within the Picking area. This may be accomplished in a number of ways. In one embodiment, the picker's location is determined by the identifying landmarks within the picking area by reading images obtained by a camera from the visor 102 and comparing them with known navigation points within the picking area. Based on these landmarks, the system determines the person's location within the picking area. In other embodiments, other location determination techniques may be used such as through GPS, wifi, NFC, RFID, or other technologies. Here, signals may be received from different transceivers that compare signal strengths, the times at which the signals are received, and the like in order to calculate the location of the picker.

Once the location of the person is known, the system calculates the best route to the next picking location in step 208. This location is where the next product or set of products is located that should be loaded onto a pallet or in a cart or bin. In step 210, in order to guide the person to the desired location, the system will use the visor 102 to display holographic navigation aids such as arrows, lines, and/or dots to specify where the person should move.

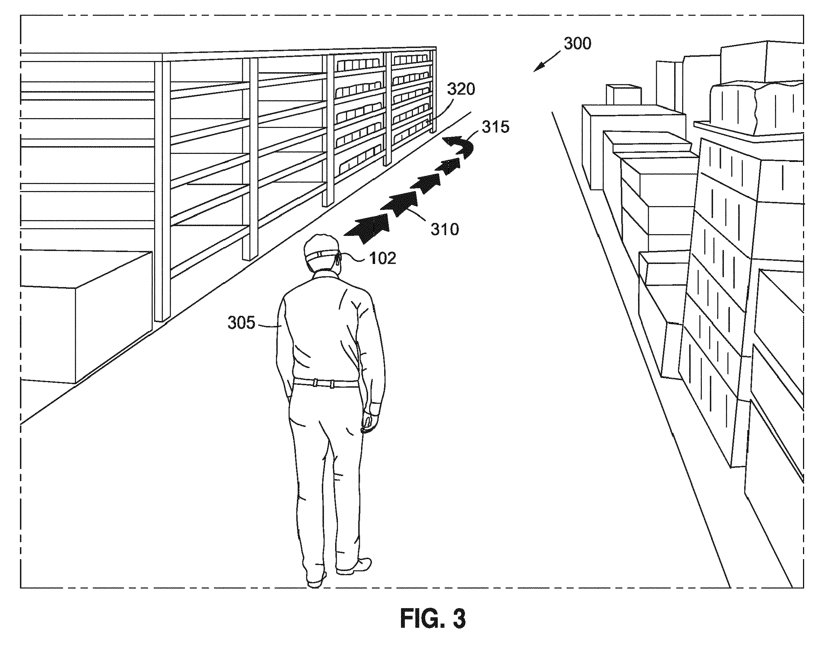

An example of this is shown in FIG. 3. FIG. 3 shows a warehouse 300 or other inventory storage facility which houses a number of different products. A worker or picker 305 wearing a visor 102 may receive instructions to pick a product located on a shelf 320 a distance away from the picker 305. Based on the calculated location of the picker 305 and the location of the shelf 320 with the product to be picked, the system calculates a path from the picker's location to the shelf 320. The path is conveyed to the picker by a plurality of visual indicators 310. The visual indicators may be a number of holographic arrows overlaid on the visor 102 in the field of view of the picker to look as though they are at eye level, as shown in FIG. 3. The arrows 310 may also be overlaid to appear on the floor, above the picker, or the like. An ending arrow 315 may be at the end of the path to indicate the location of the desired shelf 320. Other symbols such as lines, dots, pointing fingers, or the like may be used as the holographic overlaid image.

Returning to FIG. 2, the system continuously monitors the person's location within the picking area to determine whether the picker has reached the correct picking location in step 212. The process continuously repeats steps 206 to 212 until the person has reached the correct picking location in step 212.

### 3.- Item Validation

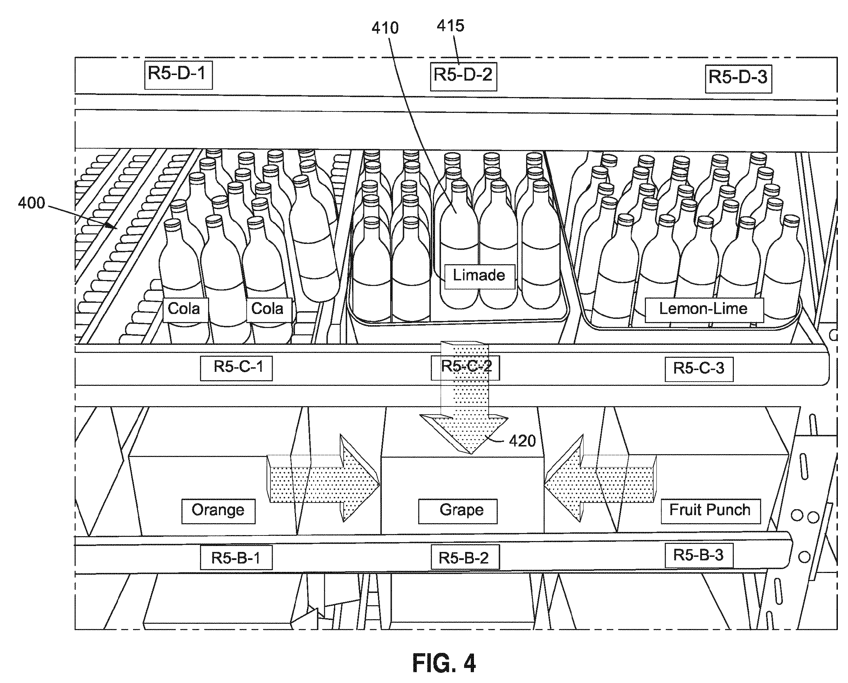

Once the desired picking location has been reached, the system will display a hologram on the visor to highlight the precise picking location and product to be picked in step 213, as shown in FIG. 4.

In FIG. 4, a picking area 400 is shown. The picking area 400 may be a location along a series of shelves as shown, or may also be a pallet of inventory, or any other storage container or unit with inventory. Within the picking area 400, there may be a plurality of different products 410. In this example, various beverages in different types of packaging are shown. Further, each product may have a label 415 on the shelf next to the product. The label may identify a specific stocking location within the picking area 400, such as a particular rack on a shelf.

The picker standing in front of the picking area 400 is positioned such that the camera of the visor 102 may image the picking area 400, the products 410, and the labels 415. Based on the image received by the camera, the system processes the names of the products 410, the labels 415, or any other product identifiers such as one- or two-dimensional bar codes. Such processing may include image or text recognition. Other methods of product identification may be used such as RFID, NFC, or other protocols.

Based on the processing, the system identifies the product 410 to be picked within the picking area 400. The system instructs the visor to generate holographic overlay indicators 420 showing the picker the correct item to be picked. The indicators 420 may be arrows as shown, or may be any other indicator such as images of pointing fingers, a circle or box generated around the correct product 410, or the like. The indicators may be still holographic images, or may include animation.

Returning to FIG. 2, in step 214, the system gives a visual and/or audio communication cue to the person to tell the person how many of the items he or she needs to pick. For example, speakers on the visor may instruct the picker to grab a certain number of products. In another example, a number of items may be displayed as a holographic overlay. When the person picks an item from the picking location, the system analyzes an image of the picked item obtained via a camera on the visor to ensure that the person has correctly picked the desired item in step 216. This validation may be done via image recognition, a barcode, an item number, or the like. If it is relevant to the operation being supported, this information may be saved by the system for tracking purposes, such as identifying which specific item lots were included in a given pick, and updating inventory databases.

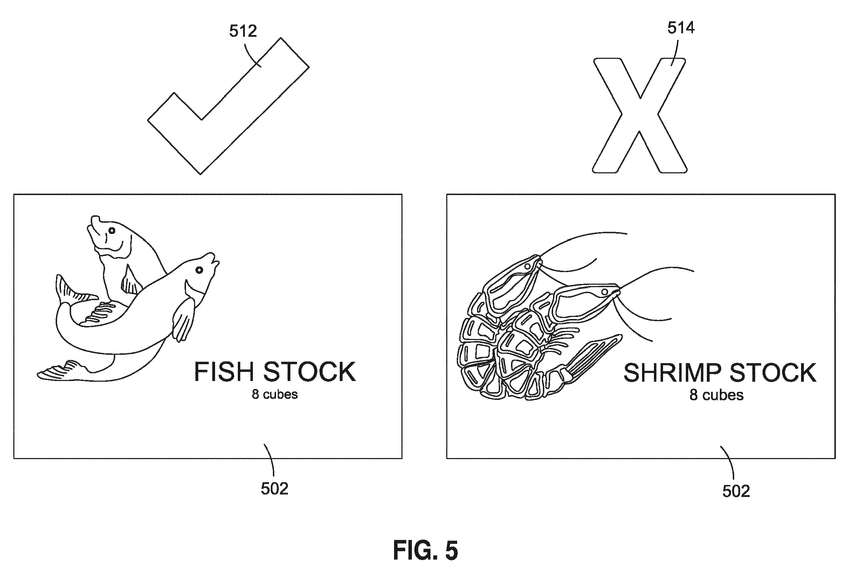

In step 218, it is determined whether the correct item was picked. An example of this is shown in FIG. 5. Here, an example of labels for two similar products 502, fish stock, and shrimp stock are shown. In this example, the assignment is for the user to select the fish stock product 502. When the picker selects the correct product, the system validates that the correct item has been picked via image or text recognition, a bar code, or the like. When the validation is successful, the process proceeds to step 221 (FIG. 2), and a holographic image 512 is overlaid on the visor indicating that the correctly picked item has been validated. Here, the image 512 is a check mark. The check mark, for example, may be a green colored checkmark. Of course, other similar images may be used such as a "thumbs up" a "green light" or any other image indicating successful validation. The image may also be accompanied by an audio cue, such as a voice message stating that the product is validated.

On the other hand, if the validation fails, meaning the system determines that the item being picked is not the correct item, the system will give visual and/or audible signals to the person such as a red X hologram 514 over the item and/or an audible alarm in step 220 in FIG. 2. The process would then return to step 221 to again signal to the picker the correct item to be picked.

### 4.- Item Placement

Once the correct item has been picked, the system advantageously allows the picker not only to load the correct item onto a pallet or into a container, but the system also allows the picker to place the item in a predetermined spot on the pallet or within the container. This may help to facilitate further efficiencies during storage and delivery of the picked products.

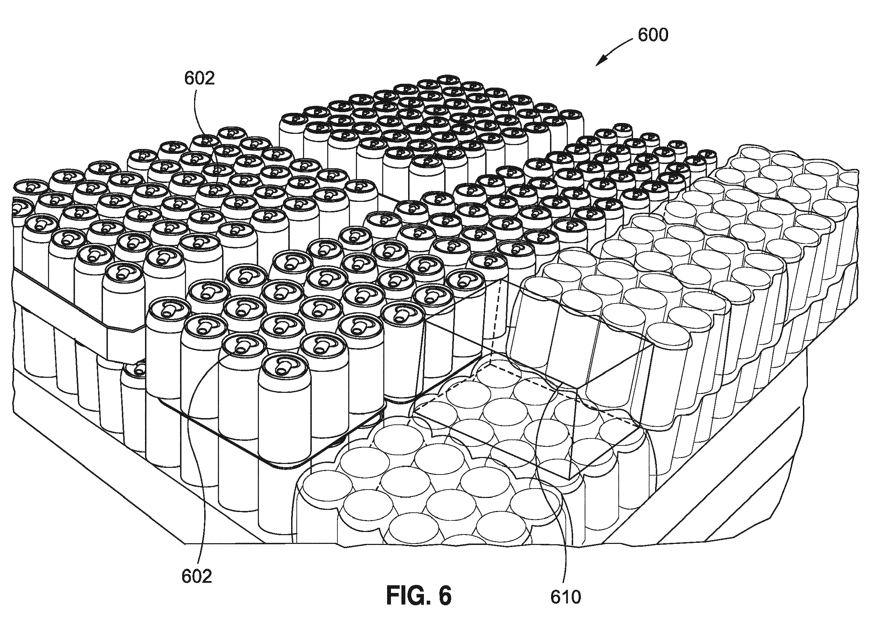

In step 222, the system may display a hologram of the item being picked in the exact location where it should be placed within the bin, cart, or pallet. This may be done by showing a holographic outline of the product 610 on the pallet 600 as shown in FIG. 6. The hologram 610 may also be an image of the product at that location. The position of the product on the pallet 600 or in the cart or bin may be predetermined by the system to facilitate efficient loading and unloading of the pallet, cart, or bin. The placement of the holographic product 610 may be accomplished by image recognition from images obtained by the visor 102 to determine the correct location relative to products 602 already placed on the pallet, bin, or cart 600. In step 224, the system will validate that the item has been placed in the correct location by comparing the location where the person placed the item with the desired location.

If the person places the item in the correct location, the system will give visual and/or audible confirmation that the item was placed correctly such as a green checkmark hologram over the item, similar to that shown in FIG. 5. If the validation fails, the system will proceed to step 226 and give visual and/or audible signals indicating the item is in the incorrect location. If appropriate, the system may provide a holographic aid, such as arrows, so the person can move the item from an incorrect location to the correct location.

After the item has been placed in the correct position, the system determines whether the last item of a list of items has been picked and placed on the pallet or in the cart or bin in step 228. If there are more items to be picked, the process continues by returning to step 206 to pick the next item. If there are no more items to pick, the process proceeds to step 230.

After the last item has been picked, the visor 102 display holographic images to direct the picker to the location where the pallet, bin, or cart with the picked items should be delivered in step 230. For example, the picker may be directed to take a pallet to a loading dock where it can be shipped to a store or other location by a truck.

The system provides a number of advantages over prior logistics systems. First, the risk of user error is substantially decreased. By use of the visor 102, the user can receive exact instructions in the form of holographic images that overlay the picker's real environment. This allows the picker to follow the most efficient paths through the picking area and easily find the exact items. Furthermore, the system can verify each action taken by the picker to ensure that it is correct.

In addition, the time required to communicate instructions via the use of holographic images is substantially lower than the time required for a person to read a paper document or a two-way interaction required by a system that relies solely on voice recognition, thus enhancing overall productivity.

Further, the holographic picking system may further increase efficiency by showing a worker exactly how to load a pallet, bin, or cart. The logistics system may virtually build a pallet with products placed in specific locations on various levels of the pallet to facilitate the loading and unloading of the product on the pallet. The holographic picking system allows the user to easily build the pallet exactly as designed without any complicated instructions or diagrams.

A number of other applications and modifications are also possible. For example, while the above description has been explained in the context of picking a product from a warehouse, the system may also be applied to warehouse stocking. In the stocking scenario, instead of loading items from the warehouse on a pallet or other storage container, the user would be directed to place products from a storage container into inventory at specific warehouse locations. In this scenario, overlaid holograms would direct the user to the correct locations and would validate that the user places the correct product in the correct quantities and the correct locations.

In another modification, the system may facilitate delivery of products. For example, some delivery vehicles make deliveries to multiple locations during a single route. In this scenario, the driver needs to find the correct products or packages that need to be delivered to the particular customer. The system, utilizing the holographic visor, can show the driver where the products are within his delivery vehicle, and can validate that the driver picks the correct items from the vehicle as well as the correct quantities. Such information can then be recorded so that the system stores information concerning the location of all products. Such information may prove helpful in the event of a product recall or the like.

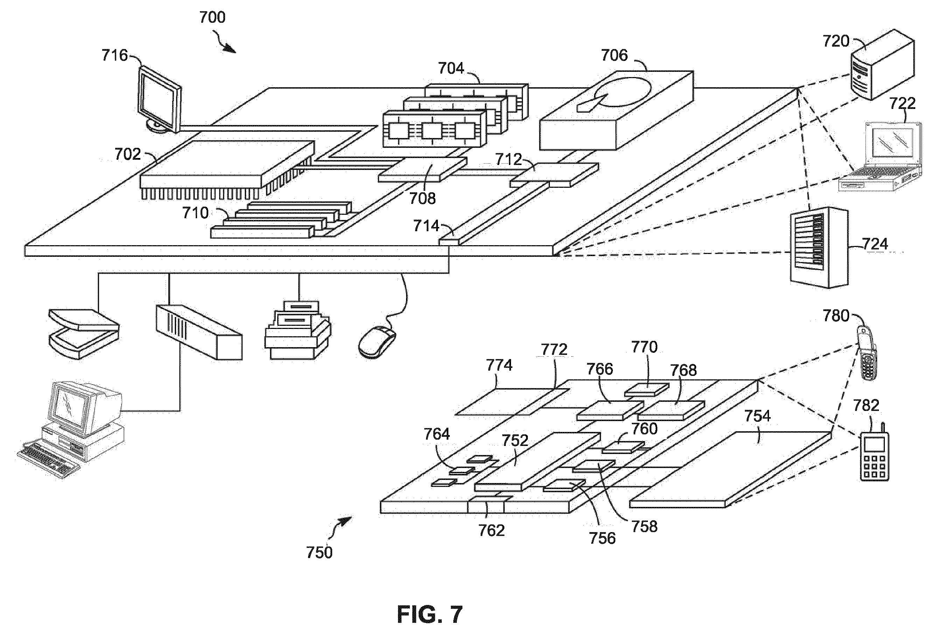

FIG. 7 is a block diagram showing example or representative computing devices and associated elements that may be used to implement the systems method and apparatus described herein. FIG. 7 shows an example of a generic computing device 700 and a generic mobile computing device 750, which may be used with the techniques described here. Computing device 700 is intended to represent various forms of digital computers, such as laptops, desktops, workstations, personal digital assistants, servers, blade servers, mainframes, and other appropriate computers. Computing device 750 is intended to represent various forms of mobile devices, such as personal digital assistants, cellular telephones, smart phones, and other similar computing devices. The components shown here, their connections and relationships, and their functions, are meant to be exemplary only, and are not meant to limit implementations of the inventions described and/or claimed in this document.

Computing device 700 includes a processor 702, memory 704, a storage device 706, a high-speed interface or controller 708 connecting to memory 704 and high-speed expansion ports 710, and a low-speed interface or controller 712 connecting to low-speed bus 714 and storage device 706. Each of the components 702, 704, 706, 708, 710, and 712, are interconnected using various busses, and may be mounted on a common motherboard or in other manners as appropriate. The processor 702 can process instructions for execution within the computing device 700, including instructions stored in the memory 704 or on the storage device 706 to display graphical information for a GUI on an external input/output device, such as display 716 coupled to high-speed controller 708. In other implementations, multiple processors and/or multiple buses may be used, as appropriate, along with multiple memories and types of memory. Also, multiple computing devices 700 may be connected, with each device providing portions of the necessary operations (e.g., as a server bank, a group of blade servers, or a multiprocessor system).

The memory 704 stores information within the computing device 700. In one implementation, the memory 704 is a volatile memory unit or units. In another implementation, the memory 704 is a non-volatile memory unit or units. The memory 704 may also be another form of computer-readable medium, such as a magnetic or optical disk.

The storage device 706 is capable of providing mass storage for the computing device 700. In one implementation, the storage device 706 may be or contain a computer-readable medium, such as a floppy disk device, a hard disk device, an optical disk device, or a tape device, a flash memory or other similar solid state memory device, or an array of devices, including devices in a storage area network or other configurations. A computer program product can be tangibly embodied in an information carrier. The computer program product may also contain instructions that, when executed, perform one or more methods, such as those described above. The information carrier is a computer- or machine-readable medium, such as the memory 704, the storage device 706, or memory on processor 702.

The high-speed controller 708 manages bandwidth-intensive operations for the computing device 700, while the low-speed controller 712 manages lower bandwidth-intensive operations. Such allocation of functions is exemplary only. In one implementation, the high-speed controller 708 is coupled to memory 704, display 716 (e.g., through a graphics processor or accelerator), and to high-speed expansion ports 710, which may accept various expansion cards (not shown). In the implementation, low-speed controller 712 is coupled to storage device 706 and low-speed bus 714. The low-speed bus 714, which may include various communication ports (e.g., USB, Bluetooth, Ethernet, wireless Ethernet) may be coupled to one or more input/output devices, such as a keyboard, a pointing device, a scanner, or a networking device such as a switch or router, e.g., through a network adapter.

The computing device 700 may be implemented in a number of different forms, as shown in the figure. For example, it may be implemented as a standard server 720, or multiple times in a group of such servers. It may also be implemented as part of a rack server system 724. In addition, it may be implemented in a personal computer such as a laptop computer 722. Alternatively, components from computing device 700 may be combined with other components in a mobile device (not shown), such as device 750. Each of such devices may contain one or more of computing device 700, 750, and an entire system may be made up of multiple computing devices 700, 750 communicating with each other.

Computing device 750 includes a processor 752, memory 764, an input/output device such as a display 754, a communication interface 766, and a transceiver 768, among other components. The device 750 may also be provided with a storage device, such as a microdrive or other device, to provide additional storage. Each of the components 750, 752, 764, 754, 766, and 768, are interconnected using various buses, and several of the components may be mounted on a common motherboard or in other manners as appropriate.

The processor 752 can execute instructions within the computing device 750, including instructions stored in the memory 764. The processor may be implemented as a chipset of chips that include separate and multiple analog and digital processors. The processor may provide, for example, for coordination of the other components of the device 750, such as control of user interfaces, applications run by device 750, and wireless communication by device 750.

Processor 752 may communicate with a user through control interface 758 and display interface 756 coupled to a display 754. The display 754 may be, for example, a TFT LCD (Thin-Film-Transistor Liquid Crystal Display) or an OLED (Organic Light Emitting Diode) display, or other appropriate display technology. The display interface 756 may comprise appropriate circuitry for driving the display 754 to present graphical and other information to a user. The control interface 758 may receive commands from a user and convert them for submission to the processor 752. In addition, an external interface 762 may be provide in communication with processor 752, so as to enable near area communication of device 750 with other devices. External interface 762 may provide, for example, for wired communication in some implementations, or for wireless communication in other implementations, and multiple interfaces may also be used.

The memory 764 stores information within the computing device 750. The memory 764 can be implemented as one or more of a computer-readable medium or media, a volatile memory unit or units, or a non-volatile memory unit or units. Expansion memory 774 may also be provided and connected to device 750 through expansion interface 572, which may include, for example, a SIMM (Single In Line Memory Module) card interface. Such expansion memory 774 may provide extra storage space for device 750, or may also store applications or other information for device 750. Specifically, expansion memory 774 may include instructions to carry out or supplement the processes described above, and may include secure information also. Thus, for example, expansion memory 774 may be provide as a security module for device 750, and may be programmed with instructions that permit secure use of device 750. In addition, secure applications may be provided via the SIMM cards, along with additional information, such as placing identifying information on the SIMM card in a non-hackable manner.

The memory may include, for example, flash memory and/or NVRAM memory, as discussed below. In one implementation, a computer program product is tangibly embodied in an information carrier. The computer program product contains instructions that, when executed, perform one or more methods, such as those described above. The information carrier is a computer- or machine-readable medium, such as the memory 764, expansion memory 774, or memory on processor 752, that may be received, for example, over transceiver 768 or external interface 762.

Device 750 may communicate wirelessly through communication interface 766, which may include digital signal processing circuitry where necessary. Communication interface 766 may provide for communications under various modes or protocols, such as GSM voice calls, SMS, EMS, or MMS messaging, CDMA, TDMA, PDC, WCDMA, CDMA2000, or GPRS, among others. Such communication may occur, for example, through radio-frequency transceiver 768. In addition, short-range communication may occur, such as using a Bluetooth, Wife, or other such transceiver (not shown). In addition, GPS (Global Positioning system) receiver module 770 may provide additional navigation- and location-related wireless data to device 750, which may be used as appropriate by applications running on device 750.

Device 750 may also communicate audibly using audio codec 760, which may receive spoken information from a user and convert it to usable digital information. Audio codec 760 may likewise generate audible sound for a user, such as through a speaker, e.g., in a handset of device 750. Such sound may include sound from voice telephone calls, may include recorded sound (e.g., voice messages, music files, etc.) and may also include sound generated by applications operating on device 750.

The computing device 750 may be implemented in a number of different forms, as shown in the figure. For example, it may be implemented as a cellular telephone 780. It may also be implemented as part of a smart phone 782, personal digital assistant, a computer tablet, or other similar mobile device.

Thus, various implementations of the systems and techniques described here can be realized in digital electronic circuitry, integrated circuitry, specially designed ASICs (application specific integrated circuits), computer hardware, firmware, software, and/or combinations thereof. These various implementations can include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device.

These computer programs (also known as programs, software, software applications or code) include machine instructions for a programmable processor, and can be implemented in a high-level procedural and/or object-oriented programming language, and/or in assembly/machine language. As used herein, the terms "machine-readable medium" "computer-readable medium" refers to any computer program product, apparatus and/or device (e.g., magnetic discs, optical disks, memory, Programmable Logic Devices (PLDs)) used to provide machine instructions and/or data to a programmable processor, including a machine-readable medium that receives machine instructions as a machine-readable signal. The term "machine-readable signal" refers to any signal used to provide machine instructions and/or data to a programmable processor.

To provide for interaction with a user, the systems and techniques described here can be implemented on a computer having a display device (e.g., a CRT (cathode ray tube) or LCD (liquid crystal display) monitor) for displaying information to the user and a keyboard and a pointing device (e.g., a mouse or a trackball) by which the user can provide input to the computer. Other kinds of devices can be used to provide for interaction with a user as well; for example, feedback provided to the user can be any form of sensory feedback (e.g., visual feedback, auditory feedback, or tactile feedback); and input from the user can be received in any form, including acoustic, speech, or tactile input.

The systems and techniques described here can be implemented in a computing system (e.g., computing device 700 and/or 750) that includes a back end component (e.g., as a data server), or that includes a middleware component (e.g., an application server), or that includes a front end component (e.g., a client computer having a graphical user interface or a Web browser through which a user can interact with an implementation of the systems and techniques described here), or any combination of such back end, middleware, or front end components. The components of the system can be interconnected by any form or medium of digital data communication (e.g., a communication network). Examples of communication networks include a local area network ("LAN"), a wide area network ("WAN"), and the Internet.

The computing system can include clients and servers. A client and server are generally remote from each other and typically interact through a communication network. The relationship of client and server arises by virtue of computer programs running on the respective computers and having a client-server relationship to each other.

In the example embodiment, computing devices 700 and 750 are configured to receive and/or retrieve electronic documents from various other computing devices connected to computing devices 700 and 750 through a communication network, and store these electronic documents within at least one of memory 704, storage device 706, and memory 764. Computing devices 700 and 750 are further configured to manage and organize these electronic documents within at least one of memory 704, storage device 706, and memory 764 using the techniques described herein.

In addition, the logic flows depicted in the figures do not require the particular order shown, or sequential order, to achieve desirable results. In addition, other steps may be provided, or steps may be eliminated, from the described flows, and other components may be added to, or removed from, the described systems. Accordingly, other embodiments are within the scope of the following claims.

While various embodiments of the invention have been described, it will be apparent to those of ordinary skill in the art that many more embodiments and implementations are possible that are within the scope of this invention. In addition, the various features, elements, and embodiments described herein may be claimed or combined in any combination or arrangement.

Alternative expressions of the inventive concept are set out in the following numbered clauses:
1. A holographic picking system comprising:
   a visor configured to generate holographic images appearing as overlaid on a real background environment, the visor including a processor and control instructions which when executed cause the visor to:
      validate a user and receive logistics information for items to be picked;
      overlay navigation instructions onto the real background to navigate to a predetermined product location;
      identify and validate a product picked by a user;
      overlay product placement instructions to place the product on a container.
2. The holographic picking system of clause 1, wherein the navigation instructions are generated by determining the user's location within a picking area and calculating a path to the predetermined product location.
3. The holographic picking system of clause 2, wherein the user's location is determined via at least one of an NFC, Wi-Fi, GPS, and RFID positioning system.
4. The holographic picking system of clause 2, wherein the user's location is determined via image recognition of predetermined landmarks imaged by a camera of the visor.
5. The holographic picking system of clause 1, wherein the navigation instructions appear as arrows overlaid on the real environment.
6. The holographic picking system of clause 1, wherein the system identifies the product picked by a user via at least one of image recognition, text recognition, a one-dimensional barcode, and a two-dimensional barcode.
7. The holographic picking system of clause 1, wherein the system provides at least one of a visual and an audio communication to the user instructing the user concerning a quantity of products to be picked.
8. The holographic picking system of clause 1, wherein the system provides at least one of a visual and an audio communication to the user to indicate whether the correct item has been picked.
9. The holographic picking system of clause 8, wherein the at least one visual and audio communication comprises a holographic overlay appearing as a green check mark to indicate a correct item has been picked, and a holographic overlay appearing as a red X mark to indicate that an incorrect item has been picked.
10. A machine implemented method of loading a storage container with inventory performed with a visor configured to generate holographic images appearing as overlaid on a real background, the method comprising:
   generating instructions for a user to load the storage container with predetermined inventory;
   based on the generated instructions, overlaying a holographic image onto the storage container indicating where a product should be placed in the storage container;
   validating the placement of the product on the storage container.
11. The method according to clause 10, wherein the instructions are generated based on logistics for later retrieving the inventory from the storage container.
12. The method according to clause 10, wherein the holographic image is a holographic outline of the product to be placed in the storage container.
13. The method according to clause 10, wherein the validating step comprises at least one of a visual and an audio communication indicating whether the correct item has been correctly placed in the storage container.
14. The method according to clause 13, wherein the at least one visual and audio communication comprise a holographic indicator.
15. A machine implemented inventory management method utilizing a visor configured to generate holographic images appearing as overlaid on a real background, the method comprising:
   validating a user and receiving logistics information for inventory to be moved by the user;
   generating navigation instructions to overlay onto the real background to navigate the user to a predetermined product location;
      identifying and validating a product moved by a user;
      generating product placement instructions to overlay onto the real background to place the product in a storage location.
16. The method of clause 15, wherein the navigation instructions are generated by determining the user's location and calculating a path to the storage location.
17. The method of clause 15, wherein the navigation instructions appear as arrows overlaid on the real environment.
18. The method of clause 15, wherein the system identifies the product moved by a user via at least one of image recognition, text recognition, a one-dimensional barcode, and a two-dimensional barcode.
19. The method of clause 15, wherein the system provides at least one of a visual and an audio communication to the user instructing the user concerning a quantity of products to be moved.
20. The method of clause 15, wherein the system provides at least one of a visual and an audio communication to the user to indicate whether the correct item has been moved.

## Claims

1. A holographic picking system comprising:
a visor configured to generate holographic images appearing as overlaid on a real background environment, the visor including a processor and control instructions which when executed cause the visor to:
validate a user and receive logistics information for items to be picked;
overlay navigation instructions onto the real background to navigate to a predetermined product location;
identify and validate a product picked by a user;
overlay product placement instructions to place the product on a container.

2. The holographic picking system of claim 1, wherein the system provides at least one of a visual and an audio communication to the user to indicate whether the correct item has been picked.

3. The holographic picking system of claim 2, wherein the at least one visual and audio communication comprises a holographic overlay appearing as a green check mark to indicate a correct item has been picked, and a holographic overlay appearing as a red X mark to indicate that an incorrect item has been picked.

4. A machine implemented method of loading a storage container with inventory performed with a visor configured to generate holographic images appearing as overlaid on a real background, the method comprising:
generating instructions for a user to load the storage container with predetermined inventory;
based on the generated instructions, overlaying a holographic image onto the storage container indicating where a product should be placed in the storage container;
validating the placement of the product on the storage container.

5. The method according to claim 4, wherein the instructions are generated based on logistics for later retrieving the inventory from the storage container.

6. The method according to claims 4 or 5, wherein the holographic image is a holographic outline of the product to be placed in the storage container.

7. The method according to any of claims 4 to 6, wherein the validating step comprises at least one of a visual and an audio communication indicating whether the correct item has been correctly placed in the storage container.

8. The method according to claim 7, wherein the at least one visual and audio communication comprise a holographic indicator.

9. A machine implemented inventory management method utilizing a visor configured to generate holographic images appearing as overlaid on a real background, the method comprising:
validating a user and receiving logistics information for inventory to be moved by the user;
generating navigation instructions to overlay onto the real background to navigate the user to a predetermined product location;
identifying and validating a product moved by a user;
generating product placement instructions to overlay onto the real background to place the product in a storage location.

10. The method of claim 9 or the holographic picking system of claim 1, wherein the navigation instructions are generated by determining the user's location and calculating a path to the predetermined product location.

11. The method or the holographic picking system of claim 10, wherein the user's location is determined via at least one of an NFC, Wi-Fi, GPS, and RFID positioning system, or via image recognition of predetermined landmarks imaged by a camera of the visor.

12. The method of any of claims 9 to 11 or the holographic picking system of any of claims 1, 10 or 11, wherein the navigation instructions appear as arrows overlaid on the real environment.

13. The method of any of claims 9 to 12 or the holographic picking system of any of claims 1 or 10 to 12, wherein the system identifies the product moved by a user via at least one of image recognition, text recognition, a one-dimensional barcode, and a two-dimensional barcode.

14. The method of any of claims 9 to 13 or the holographic picking system of any of claims 1 or 10 to 13, wherein the system provides at least one of a visual and an audio communication to the user concerning a quantity of products to be moved.

15. The method of any of claims 9 to 14, wherein the system provides at least one of a visual and an audio communication to the user to indicate whether the correct item has been moved.
